# EUROPÄISCHE PATENTSCHRIFT

(11) **EP 0 386 005 B1**
(45) Veröffentlichungstag und Bekanntmachung des Hinweises auf die Patenterteilung: **03.04.1996**
(21) Anmeldenummer: 88907044.7
(22) Anmeldetag: 06.07.1988
(51) Int. Cl.: A61B 5/22, G01L 3/24

(54) **LEISTUNGSMESSER FÜR EINEN KURBELANTRIEB**
POWERMETER FOR A CRANK DRIVE
DISPOSITIF DE MESURE DE LA PUISSANCE D'UNE COMMANDE A MANIVELLE

(30) Priorität: 09.07.1987 DE 3722728; 10.11.1987 DE 3738104
(43) Veröffentlichungstag der Anmeldung: 12.09.1990
(73) Patentinhaber: SCHOBERER, Ulrich, D-52428 Jülich (DE)
(72) Erfinder: SCHOBERER, Ulrich, D-52428 Jülich (DE)
(86) Internationale Anmeldenummer: EP8800601
(87) Internationale Veröffentlichungsnummer: WO8900401

(56) Entgegenhaltungen:
- EP-A- 0 026 446
- DE-A- 2 148 492
- DE-A- 2 340 582
- DE-A- 3 150 149
- FR-A- 2 493 983
- GB-A- 2 020 441
- US-A- 667 920
- US-A- 2 563 425
- US-A- 2 949 029
- US-A- 4 141 248
- US-A- 4 423 630

## Beschreibung

Die Erfindung betrifft eine Vorrichtung zur Messung der an einem Kurbelantrieb eines Fahrradtretlagers angreifenden Leistung, die folgende Merkmale aufweist:
- Ein Kurbelpaar zur Übertragung der auf die Pedale wirkenden Kraft auf ein Antriebsrad über ein oder mehrere Kettenblätter zur Umsetzung der auf das Pedal wirkenden Kraft in Vorwärtsbewegung des Fahrrades;
- mindestens ein Verformungselement, das zwischen Pedal und Kettenblättern angeordnet ist und dessen Verformung von einem Meßwertaufnehmer in ein entsprechendes Signal umgewandelt wird.
   Eine derartige Vorrichtung ist aus der DE A 3150149 bekannt.

Eine ähnliche Vorrichtung, bei der die Drehmomentübertragung von der Kurbel auf eine Antriebsscheibe erfolgt, wobei die an der Kurbel auftretenden mechanischen Größen, Drehmoment und Winkelgeschwindigkeit, in elektrische Signale umgewandelt werden und einem Auswertgerät zugeführt werden, ist aus der DE-A-2508233 bekannt. In dieser Druckschrift wird ein Kurbelantrieb beschrieben, dessen auf eine Antriebsscheibe übertragene Leistung mittels eines Bremsbandes mit einer bestimmten Kraft gebremst wird. Aus dem einstellbaren Bremsmoment und der Winkelgeschwindigkeit der Antriebsscheibe wird die entsprechende Leistung ermittelt. Insbesondere Fig.8 dieser Druckschrift zeigt einen derartigen Kurbelantrieb bei einem Fahrradergometer. Diese Leistungsmessungsvorrichtung hat jedoch in Verbindung mit Fahrrädern den Nachteil, daß die gesamte, an der Kurbel angreifende Leistung in Wärme und nicht in Vorwärtsbewegung umgesetzt wird.

Die Erfindung betrifft insbesondere die ortsungebundene Leistungsmessung an einem Fahrrad mit einer speziell hierfür konstruierten Kurbel-Kettenblatt-Einheit bzw. einem speziellen Tretlager und einem am Fahrrad befindlichen Computer zur Auswertung und Speicherung der gemessenen Werte. Eine Weiterverarbeitung der gemessenen Werte kann durch Anschluß des Fahrradcomputers an geeignete externe Rechnersysteme erfolgen.

Bisher war die erbrachte Leistung eines Menschen auf einem Fahrrad nur stationär meßbar. Dabei wurde - wie beispielsweise in der oben genannten Deutschen Offenlegungsschrift 2508233 beschrieben - mit der Kurbel über eine Antriebsscheibe in Form des Kettenblattes oder einer Riemenscheibe mittels Kette oder Riemen eine Schwungscheibe angetrieben, die durch eine Bremse, zum Beispiel eine Reibungs- oder Wirbelstrom-Bremse, gebremst wurde. Die Drehgeschwindigkeit der Schwungscheibe und die auf diese wirkende Bremskraft waren ein Maß für die erbrachte Leistung.
Durch diese Art der Leistungsmessung ist eine nichtstationäre Erfassung der Leistungswerte des Menschen nicht möglich, denn es wird keine Energie in Vorwärtsbewegung umgesetzt.

Aus der US-A-4423630 ist bekannt, die auf das Pedal ausgeübte Kraft zu messen. Dabei wird aber zunächst nur die senkrecht auf das Pedal wirkende Kraft gemessen, während die für die Vorwärtsbewegung des Fahrrades entscheidende, auf die Kurbel wirkende Tangentialkraft von der Kurbelstellung abhängt und sich somit ununterbrochen ändert. Für eine genaue Bestimmung dieser beiden unterschiedlichen Kräfte müßte eine kontinuierliche Winkelbestimmung zwischen Pedal-Kurbel einerseits und Kurbel-Fahrradrahmen andererseits erfolgen. Daher ist mit dieser Methode die in Vorwärtsbewegung umgesetzte Muskelkraft nicht bestimmbar und daher auch nicht die entsprechende Leistung.

Aufgabe der vorliegenden Erfindung ist es, die bei einem Fahrrad tatsächlich in Vorwärtsbewegung umgesetzte Leistung zu bestimmen, bei der die Leistungsmessung direkt am Kraft- bzw. Momentübertragungspunkt zwischen der an der Kurbel angreifenden Kraft und dem Kettenblatt stattfindet, ohne daß vom Probanden erbrachte Leistung nutzlos vernichtet und in Wärme, wie z.B. bei stationären Ergometern, umgewandelt wird.

Diese Aufgabe wird gemäß den kennzeichnenden Merkmalen des Anspruchs 1 dadurch gelöst, daß
der Drehmoment-Meßwertaufnehmer ein Biegeelement ist, auf dem Dehnmeßstreifen appliziert sind, und dieses Biegeelement zwischen der Kurbel und den Kettenblättern angeordnet ist und die an der Kurbel angreifende Kraft über das Biegeelement auf das Kettenblatt übertragen wird;
Mittel zur Bestimmung der Winkelgeschwindigkeit der Kurbel vorgesehen sind, wobei diese Mittel ein entsprechendes elektrisches Signal liefern;
die an sich drehenden Teilen gemessenen elektrischen Signale, die dem Drehmoment und der Winkelgeschwindigkeit entsprechen, mittels induktiver Kopplung, Infrarot-Übertragung, Optoelektronik oder Ultraschall von dem sich drehenden Teil auf ein Auswertegerät am Fahrradrahmen übertragen werden;
wenigstens das Biegeelement mit den darauf applizierten Dehnmeßstreifen in einer abdichtenden Kapselung eingeschlossen ist.

Die Bestimmung von Kräften mittels Biegeelementen und die Bestimmung der Verformung dieser Biegeelemente mittels Dehnmeßstreifen ist an sich bekannt. Beispielsweise ist in der DE-A-3209295 eine Lastmeßeinrichtung für Hebezeuge beschrieben, bei der ein C-förmiges Biegeelement, auf dessen Mittelsteg Dehnmeßstreifen appliziert sind, zur Bestimmung der an der Hakenflasche angreifenden Kraft dient. Ferner ist in der DE-A-2657843 ein Drehmomentmeßsystem beschrieben. Zwar betrifft die Druckschrift keinen Kurbelantrieb wie vorliegende Erfindung, sondern die Übertragung von Drehmomenten mittels einer Welle. Zur Bestimmung der dabei auftretenden Drehmomente sind am Umfang einer Welle Dehnmeßstreifen appliziert, aus deren Meßsignal die Torsionsbeanspruchung der Welle bestimmt wird. Auch diese Welle kann nicht als Biegeelement im Sinne des Anmeldegegenstandes aufgefaßt werden.
Ferner ist in der DE-U-8203421 eine Vorrichtung zur Messung des Energieverbrauches, nicht jedoch der Leistung, beschrieben, bei der aus der Verformung eines elastischen Stellgliedes, z.B einer Feder, und der durch die angreifende Kraft bewirkten Auslenkung dieses Stellgliedes, z.B. eine Zahnstange, die entsprechende Arbeit bestimmt wird (Arbeit = Kraft x Weg). In dieser Druckschrift ist auch erwähnt, daß schon einmal vorgeschlagen wurde, ein derartiges elastisches Stellglied in den Tretkurbelantrieb eines Fahrrades zu integrieren. Jedoch werden weitergehende Einzelheiten dieses Fahrrad -Tretkurbelantriebes nicht mitgeteilt. Weiterhin ist in der DE-A-2024422 eine Meßkupplung beschrieben, bei der zwischen einer Antriebswelle und dem Kupplungsteil eine Torsionsbuchse vorgesehen ist, auf der Dehnmeßstreifen appliziert sind, um mit letzteren die Torsionsspannung und somit das übertragene Drehmoment zu bestimmen.
Schließlich ist noch aus der US-A-4186596 ein Verformungselement bekannt, das aus einer Scheibe besteht und beispielsweise ein Autolenkrad oder eine Autofelge sein kann. Diese Scheibe weist eine große Anzahl von Öffnungen auf, die alle den gleichen Abstand vom Scheibenmittelpunkt besitzen. Die zwischen den Öffnungen stehenbleibenden Stege dienen als Verformungselemente, auf denen ebenfalls Dehnmeßstreifen appliziert sind.

Bei der gemäß vorliegender Erfindung vorgeschlagenen Leistungsmessung wird insbesondere die erbrachte Leistung direkt am Tretlager eines Fahrrades gemessen. Das der Tretkraft entsprechende Drehmoment wird durch die Verbiegung eines geeigneten Biegeelementes, auf dem Dehnmeßstreifen appliziert sind, in ein elektrisches Signal umgewandelt und durch induktive Übertragung auf einen mit dem Fahrradrahmen verbundenen Empfänger übertragen. Die Tretgeschwindigkeit und damit die dieser entsprechende Winkelgeschwindigkeit wird durch die Tretfrequenzmessung ermittelt. Beide Werte, Tretkraft und Tretgeschwindigkeit, werden in einem Mikrocomputer am Fahrrad verarbeitet, zur Anzeige gebracht und abgespeichert.

Dieser Leistungsmesser soll einerseits für Sportler, insbesondere für Radsportler, eine entscheidende Hilfe bei der Gestaltung und Optimierung des Trainings sein. Mit diesem Gerät ist es möglich, die Leistung direkt in Bezug zur Herzfrequenz zu setzen und aus diesen beiden Fakten Schlüsse über die Effektivität, die Intensität des Trainings und über den Trainingszustand des Sportlers zu ziehen. Die Herzfrequenz kann schon seit längerer Zeit nichtstationär gemessen werden und ist aus diesem Grund Stand der Technik.
Ferner kann dieser Leistungsmesser bei Patienten nach Entlassung aus einer Rehabilitations-Klinik eingesetzt werden, weil die Messung der Belastungsintensität neben der Herzfrequenzmessung die wichtigsten Daten über den Stand der Genesung liefert. Der Patient kann mit diesem Gerät selbständig arbeiten und ist nicht auf einen stationären Standleistungsergometer beim Arzt angewiesen. Insbesondere kann der Patient mit diesem Gerät in der freien Natur trainieren, so daß das Training dem Patienten mehr Freude macht, als wenn er an einen in geschlossenen Räumen aufgestellten stationären Fahrradergometer gebunden ist.

Das Neue an diesem Gerät ist, daß nicht wie bisher die Leistung anhand der Geschwindigkeit einer gebremsten Schwungscheibe bestimmt wird, sondern direkt am Moment- bzw. Kraftübertragungspunkt zwischen der an der Kurbel angreifenden Kraft und den Kettenblättern gemessen wird. Durch diese Messung geht keine Energie verloren und Fehler, die aufgrund von Übertragungselementen auftreten, wie zum Beispiel bei Ketten- oder Riemenantrieb, als auch Fehler, die aus Reibungsverlusten resultieren, werden vermieden. Gleichzeitig läßt sich die gesamte Leistung des Probanden in Vorwärtsbewegung umsetzen.

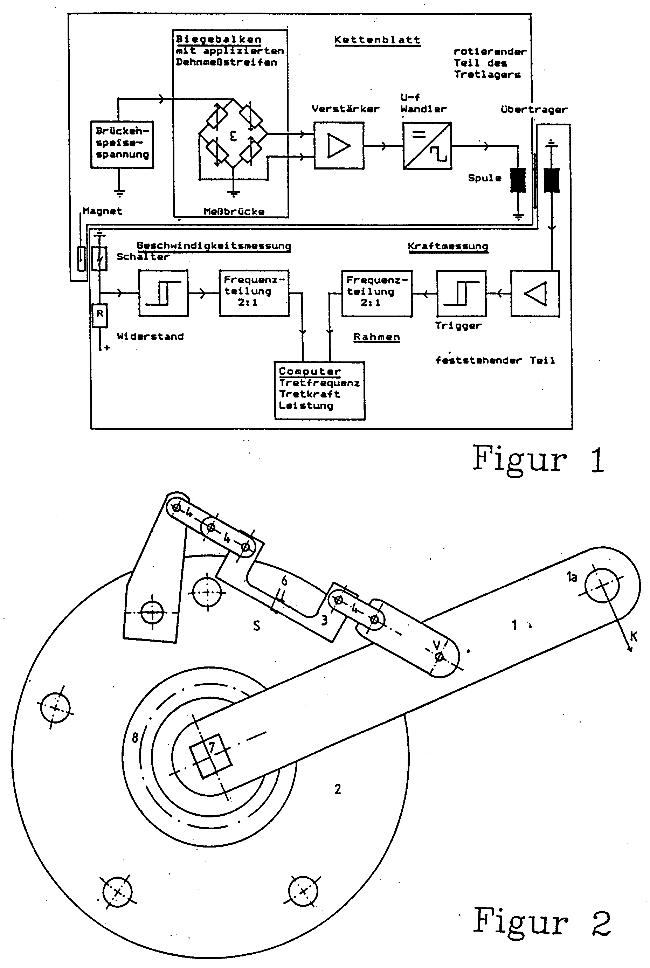

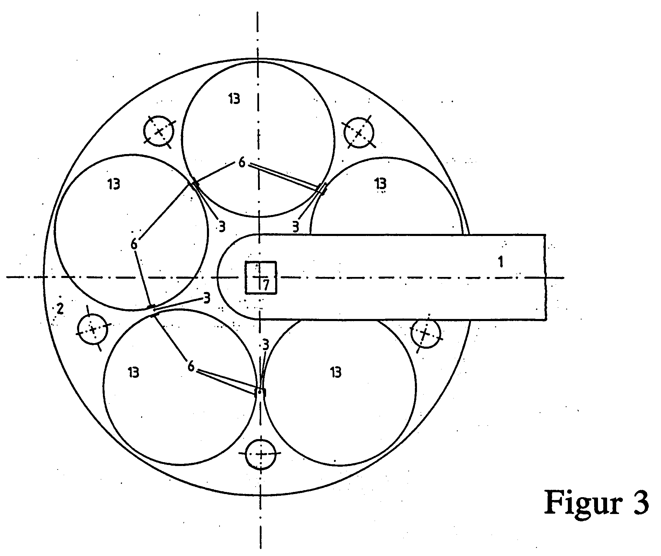

Die Drehmoment- bzw. Kraftmessung kann bei einem Fahrrad beispielsweise folgendermaßen durchgeführt werden:
Tretlagerachse 7 und Antriebsscheibe 2 werden durch ein Kugellager kraftmäßig getrennt. Die Kraftübertragung von der Kurbel 1 auf das Kettenblatt erfolgt über einen Biegebalken 3, auf dem eine Dehnmeßstreifenbrücke 6 appliziert ist (Figur 2, 3);
oder die Drehmomentmessung erfolgt direkt mit auf der Kurbel 1 applizierten Dehnmeßstreifen.

Die Dehnmeßstreifen 6 werden zu einer Wheatstone-Brücke verschaltet, wobei die Meßbrücke einen, zwei oder vier Dehnmeßstreifen aufweisen kann und die restlichen der vier Brückenwiderstände durch normale (Ohmsche-) Widerstände gebildet werden.

Die Verstärkung der Dehnmeßstreifen-Brückendiagonalspannung und die danach folgende Spannungsfrequenzwandlung, welche für die induktive Signalübertragung notwendig ist, findet direkt auf dem rotierenden Tretlager statt.

Als Stromquelle kann eine Trockenzelle, ein Akku, Solarzellen oder induktiv übertragener Strom dienen.

Die Signalübertragung vom rotierenden Tretlager auf den Rahmen erfolgt induktiv. Sie kann aber auch telemetrisch, mittels Infrarot-Übertragung, Optoelektronik, Schleifkontakten, Ultraschall oder kapazitiver Kopplung erfolgen.

Die Tretgeschwindigkeitsmessung und damit die Winkelgeschwindigkeitsbestimmung erfolgt mittels eines Magnetschalters, zum Beispiel eines Reed-Kontaktes, der am Rahmen oder auf der Antriebsscheibe angebracht ist. Er wird durch einen umlaufenden Magneten am rotierenden Teil des Tretlagers, beziehungsweise feststehenden Magneten am Fahrradrahmen betätigt.
Die Tretgeschwindigkeitsmessung kann auch mit einer Lichtschranke, einer Induktionsschleife oder mittels eines mechanischen Drehzahlmessers erfolgen.

Die induktiv übertragene Frequenz, die proportional zur Tretkraft bzw. dem entsprechenden Moment ist, wird auf eine für einen Mikrocomputer geeignete Form gebracht, und in diesen am Fahrrad eingelesen. Die zur Tretkraft bzw. dem entsprechenden Drehmoment proportionale Frequenz kann auch auf eine Trägerfrequenz aufmoduliert und mit Hilfe dieser übertragen werden. Genauso können die zur Tretfrequenz proportionalen Signale mittels modulierter Trägerfrequenz übertragen werden. Eine Modulationsform wäre zum Beispiel die Pulsbreitenmodulation. Eine, für einen Mikrocomputer geeignete Form ist zum Beispiel Transistor-Transistor-Logik (TTL) oder C-Mos Logik.

Der Mikrocomputer errechnet aus den eingelesenen Signalen die momentane Leistung des Radfahrers. Sie kann dann direkt angezeigt oder auch zur späteren Auswertung abgespeichert werden.

Neben diesen Daten können auch noch andere Parameter in den Mikrocomputer eingelesen werden, so zum Beispiel: Herzfrequenz, Fahrzeit, gefahrene Strecke und Fahrgeschwindigkeit. Aus diesen Daten können dann zum Beispiel folgende Werte ermittelt werden: Verbrauchte Energie, Durchschnittsleistung, Durchschnittsherzfrequenz, Durchschnittsgeschwindigkeit, Leistungs-Puls-Index und PWC (physical working capacity).

In den Figuren werden spezielle Ausführungsbeispiele der Erfindung erläutert.

In Figur 1 ist ein Blockdiagramm für die Auswertung der von den Dehnmeßstreifen 6 und dem Magnetschalter erhaltenen elektrischen Signale wiedergegeben (Anordnung zu Figur 2).

Figur 2 zeigt die Übertragung der an der Kurbel 1 angreifenden Kraft K auf die Antriebsscheibe 2 mittels eines Biegebalkens 3.

Figur 3 zeigt eine starr mit der Kurbelachse 7 verbundene Antriebsscheibe 2 .

Die Figuren 4, 5 und 6 zeigen eine besondere Ausbildung der Antriebsscheibe 2 mit dem Biegeelement 3 in einer abgedichteten Kapselung.

Die Figur 7 zeigt das Blockdiagramm zu der Anordnung in den Figuren 4 , 5 und 6.

Figur 1: Die Wheatstone'sche Brücke aus Dehnmeßstreifen, die auf dem Biegebalken appliziert ist, wird durch eine Konstantspannungsquelle gespeist. Alle vier Dehnmeßstreifen sind aktiv.
Die Brückendiagonalspannung wird verstärkt und spannungsfrequenzgewandelt.
Diese zur Tretkraft bzw. zum Drehmoment proportionale Frequenz wird mittels zweier Spulen auf den feststehenden Fahrradrahmen übertragen. Dabei fungiert eine Spule als Sender und die andere Spule als Empfänger. Beide Spulen liegen sich stirnseitig gegenüber. Die Tretlagerachse dient als Spulenkern. Die so, durch Gegeninduktion, übertragene Frequenz wird verstärkt, getriggert, durch den Faktor 2 geteilt und in einen Computer eingelesen.
Die Signale vom Magnetschalter, der durch einen auf dem rotierenden Teil des Tretlagers befindlichen Magnet betätigt wird, werden getriggert, durch den Faktor 2 geteilt und auch in den am Fahrrad befindlichen Computer eingelesen.
In dem Computer wird die restliche Signalverarbeitung durchgeführt und die erhaltenen Werte werden abgespeichert.

Figur 2: Die im Punkt 1a angreifende Tretkraft K vom rechten Pedal und die vom linken Pedal über die linke Kurbel und Tretlagerachse 7 kommende Tretkraft werden im Punkt V vereint. Von dieser Stelle aus wird die Gesamttretkraft bzw. das entsprechende Gesamtdrehmoment über Kettenglieder 4 und einen Biegebalken 3 auf die Antriebsscheibe 2 übertragen.
Antriebsscheibe 2 und Tretlagerachse 7 sind durch ein Kugellager 8 entkoppelt, so daß die gesamte Tretkraft bzw. das entsprechende Gesamtdrehmoment über den Biegebalken 3 geleitet wird. Auf diesem Biegebalken 3 ist eine Vollbrücke aus Dehnmeßstreifen 6 appliziert.
Die signalverarbeitende elektronische Schaltung S nach Figur 1 befindet sich unterhalb des Biegebalkens 3 auf der Antriebsscheibe 2 . Die Schaltung S kann beispielsweise auch als Integrierte Schaltung auf einem einzigen Halbleiter-Chip untergebracht sein.
Die Kettenglieder 4 übertragen nur Kräfte in einer Richtung, so daß auf den Biegebalken 3 keine unerwünschten Nebenkräfte einwirken, zum Beispiel eine seitliche Verbiegung. Die Kettenblätter für den Antrieb werden auf die Antriebsscheibe 2 geschraubt.

Figur 3: Bei dieser Ausführung befinden sich in der Antriebsscheibe 2 Aussparungen 13 . Die Stege 3 zwischen den Aussparungen 13 dienen als Biegeelemente, auf die Dehnmeßstreifen 6 appliziert sind. Tretlagerachse 7 , Kurbel 1 und Antriebsscheibe 2 sind starr verbunden. Die signalverarbeitende elektronische Schaltung und die Stromversorgung, zum Beispiel ein Akku, befinden sich in den Aussparungen 13 der Antriebsscheibe.
Die Aussparungen können auch anderen als kreisförmigen Querschnitt haben.

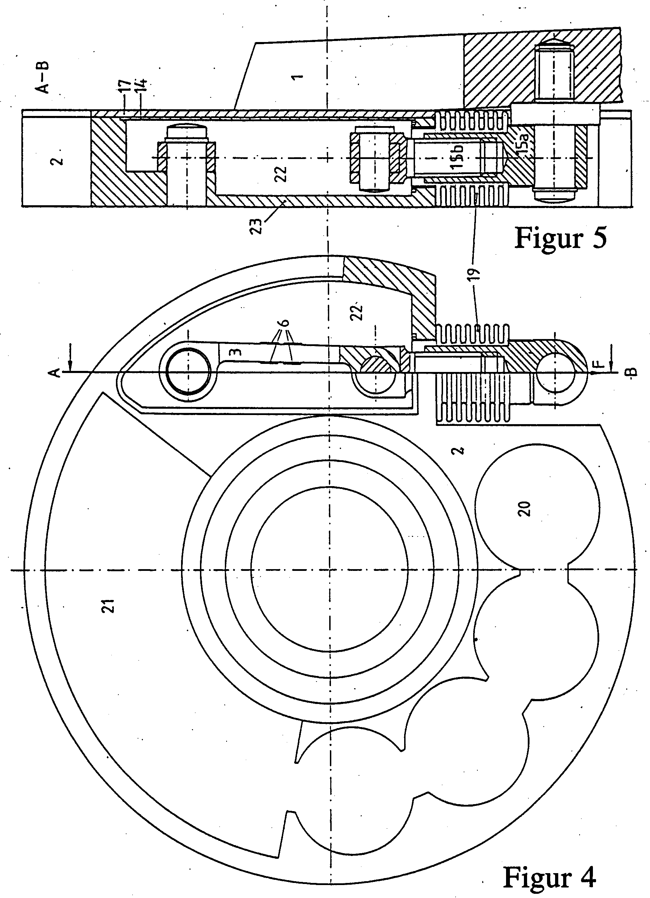

Figur 4, 5: Gemäß einer besonderen Ausführungsform der Erfindung wird das Biegeelement mit den darauf applizierten Dehnmeßstreifen in einer abdichtenden Kapselung eingeschlossen, um die Meßstelle gegen Umwelteinflüsse aller Art zu schützen. Die Meßstellengüte für die auf dem Verformungselement applizierten Dehnmeßstreifen kann durch Umwelteinflüsse, z.B. Feuchtigkeit, korrodierende Gase oder Flüssigkeiten wie Salzwasser, Schmutz, Radfahrerschweiß usw. beeinträchtigt werden, beispielsweise Veränderung der Haftstellen zwischen Biegeelement und Dehnmeßstreifen. Ferner muß die Meßstelle vor mechanischer Beschädigung geschützt werden.
Zwei bevorzugte Ausführungsbeispiele einer solchen Kapselung werden im folgenden anhand der Figuren 4, 5 und 6 beschrieben, wobei Figur 5 einen Schnitt entlang der Linie A-B der Figur 4 darstellt.

Bei dem Ausführungsbeispiel in Figur 4 und 5 befindet sich das Biegeelement 3 mit den darauf applizierten Dehnmeßstreifen in einer Aussparung 22 der Antriebsscheibe 2 , die durch einen vakuumdicht aufgebrachten Deckel 14 , z.B. durch Schweißen, Kleben oder mittels einer Rundschnurdichtung vakuumdicht abgeschlossen ist.

Die Kraftübertragung von der Kurbel 1 auf das Biegeelement 3 erfolgt durch Übertragungselemente 15a und 15b, deren Durchführung in die Antriebsscheibe 2 durch einen Balg 19 , z.B. Edelstahlbalg, vakuumdicht gestaltet ist.

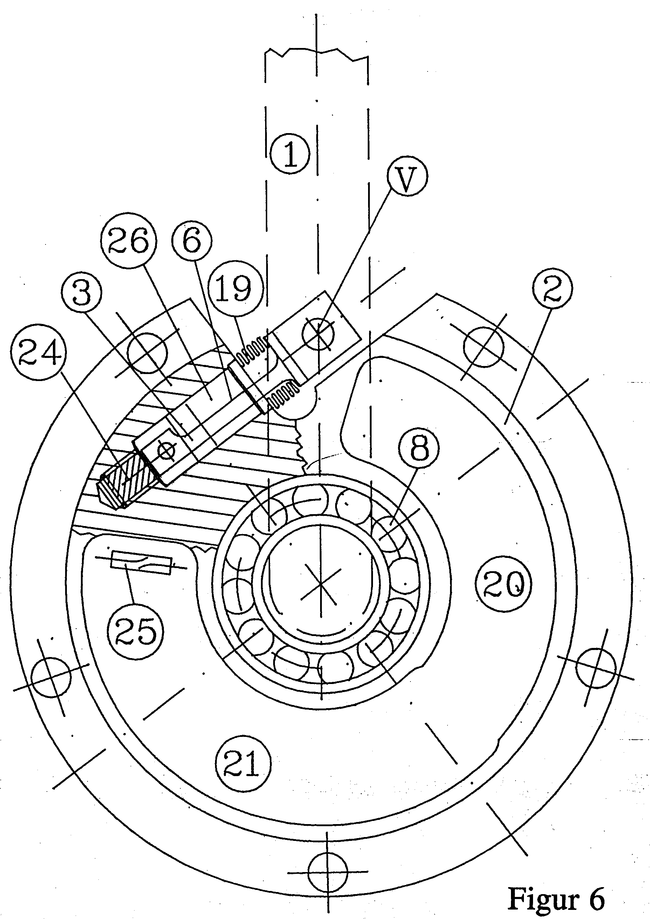

Die Antriebskurbel 1 ist durch ein Lager, z.B. Kugellager 8 (Figur 6), kraftmäßig von der Antriebsscheibe 2 getrennt, so daß das gesamte Drehmoment über das Biegeelement 3 auf die Antriebsscheibe 2 übertragen wird.

Diese vakuumdichte Kapselung ist von Vorteil, um eine gleichbleibende Meßstellengüte für die auf dem Biegeelement 3 applizierten Dehnmeßstreifen 6 aufrechtzuerhalten. Außerdem wird durch diese Art der Anordnung das Biegeelement 3 vor mechanischer Beschädigung sehr gut geschützt.

Die Figur 4 zeigt den Kraftaufnehmer mit abgenommenen Deckeln 14 und 17 , herausgenommener Kurbel 1 und herausgenommenem Lager.
Die zusätzlichen Aussparungen 21 und 22 dienen zur Unterbringung der elektronischen Verstärkerschaltung, der Signalübertragungseinheit und zur Aufnahme der Batterien oder Akkus zur Stromversorgung.

Die beiden Figuren stellen eine maßstäbliche Wiedergabe eines bevorzugten Beispiels der Erfindung dar.

Figur 6: Gemäß einer anderen, besonderen Ausführungsform einer dichten Kapselung des Biegeelementes innerhalb der Antriebsscheibe wird statt der meist gefrästen Aussparung 22 in den Figuren 4 und 5 eine Sacklochbohrung 26 vorgesehen, in derem Boden ein Gewinde eingeschnitten ist. Das Biegeelement 3 trägt an dem Befestigungspunkt V dem der Kurbel 1 gegenüberliegenden Ende ein mit einem Gewinde versehenes Befestigungselement 24, mittels dem es in das Sacklochgewinde eingeschraubt wird. Dadurch läßt sich der die Abdeckung des Biegeelementes 3 bewirkende Deckel 14 vermeiden und die Herstellung einer Bohrung ist technisch leichter als die einer Fräsung. Anstatt mittels eines Gewindes läßt sich das Biegeelement 3 auch mittels eines eingepreßten Bolzens, der die Antriebsscheibe 2 am Ende der Sacklochbohrung 26 und das Biegeelement 3 durchdringt, befestigen.
Die Position des Reed-Kontaktes zur Bestimmung der Tretfrequenz ist durch das Zeichen 25 angedeutet.

Die Sacklochbohrung 26 für das Biegeelement ist im Schnitt dargestellt. Der Außendeckel 17 der Antriebsscheibe ist abgenommen, so daß die zur Unterbringung der Verstärkerschaltung, der Signalübertragungseinheit und der Batterien oder Akkus notwendigen Aussparungen 20 und 21 erkennbar sind.

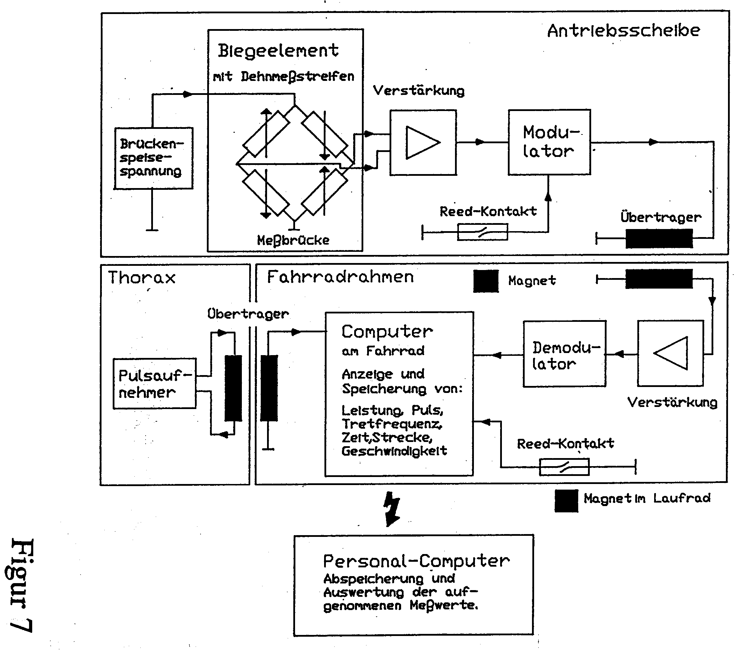

Figur 7: Dieses Blockdiagramm stellt eine Ausführungsform der Elektronik zu den Figuren 4, 5 und 6 dar.
Die Wheatstone'sche Brücke aus Dehnmeßstreifen 6, die auf dem Biegeelement 3 appliziert sind, wird durch eine Konstantspannungsquelle gespeist (Brückenspeisespannung). Bei dieser Ausführung sind vier Dehnmeßstreifen appliziert und alle aktiv.
Aus Kostengründen können zwei oder auch nur ein Dehnmeßstreifen appliziert werden und die übrig bleibenden Brückenwiderstände durch normale Widerstände ersetzt werden. Dies geht jedoch dann auf Kosten der Meßgenauigkeit oder des Verstärkeraufwandes.
Die Brückendiagonalspannung wird verstärkt und spannungsfrequenzgewandelt. Diese zur Tretkraft bzw. zum Drehmoment proportionale Frequenz und die vom Reed-Kontakt kommenden Impulse, die proportional zur Tretfrequenz und damit zur Winkelgeschwindigkeit sind, werden mittels zweier Spulen durch Pulsbreitenmodulation einer Trägerfrequenz übertragen. Dabei fungiert eine Spule als Sender und die andere Spule als Empfänger. Beide Spulen liegen sich stirnseitig gegenüber. Die so, durch Gegeninduktion, übertragenen Signale, Tretkraft und Tretfrequenz, werden verstärkt, demoduliert und in den Computer eingelesen. In diesen Computer kann auch mittels induktiver Übertragung die Herzfrequenz von einem Sender an der Brust (Thorax) des Probanden eingelesen werden. Zusätzlich werden mit einem Reed-Kontakt am Fahrradrahmen und einem Magneten, der an einer Laufradspeiche befestigt ist, Daten über die momentane Geschwindigkeit und die zurückgelegte Strecke zeitsynchron zu den anderen Meßwerten eingelesen und abgespeichert. Diese zeitsynchrone Speicherung ist wichtig, um die aufgenommenen Meßwerte bei der nachfolgenden Auswertung richtig in Bezug zueinander setzen zu können.
Das Blitzzeichen zwischen den Kästchen 'Computer am Fahrrad' und 'Personal-Computer' soll andeuten, daß die gespeicherten Meßwerte mittels einer Schnittstelle auf ein stationäres Computersystem übertragen werden können. Die Meßwerte können entweder mittels Kabel, Modem oder per Funk übertragen werden.

Die Erfindung ist in keiner Weise auf die dargestellten Ausführungsbeispiele beschränkt. Vielmehr sind auch Ausführungen denkbar, bei denen eine Antriebsscheibe aus Vollmaterial, d.h. ohne Aussparungen, zur Anwendung kommt und das die Antriebsscheibe mit der Kurbel verbindende Bieeelement in einem auf die Antriebsscheibe aufgeschraubten Dosendeckel untergebracht ist. Der Dosendeckel läßt sich gegen die Antriebsscheibe zum Bei-spiel mittels einer in eine Nut eingelegten Rundschnur oder mittels Klebung abdichten.

Die vorliegende Erfindung läßt sich bei jeder Art von Kurbelantrieb anwenden. Insbesondere läßt sich die aus der Verbiegung des Biegeelementes abgeleitete Kraftmessung bzw. Drehmomentmessung nicht nur mittels Dehnmeßstreifen sondern auch mittels induktiver Wegaufnehmer oder mittels piezokristalliner Meßwandler durchführen. Auch die Übertragung der elektrischen Signale von den Meßstellen auf den rotierenden Teilen zu dem an feststehenden Teilen der Vorrichtung befestigten Auswertegerät ist nicht auf eine induktive Übertragung beschränkt. Vielmehr lassen sich hierfür auch Telemetrie (Funk), Infrarot-Übertragung, Ultraschall, Optoelektronik (moduliertes Licht), kapazitive Übertragung oder sogar Schleifkontakte einsetzen.

Folgende besonders vorteilhafte Ausführungsformen des Gegenstandes sind möglich:
Daß das Biegeelement 3 in einer Aussparung 22, 13 der Antriebsscheibe 2 angeordnet ist, wobei die Aussparung 22, 13 mittels der abdichtenden Kapselung verschlossen ist.

Daß die Aussparung 22, 13 aus einer in die Antriebsscheibe eingefrästen Vertiefung besteht, wobei die Rückwand der Kapselung durch das stehengebliebene Material der Antriebsscheibe 2 und die Vorderwand durch einen aufgesetzten Deckel gebildet werden.

Der Deckel 14 kann aufgeschweißt, aufgelötet, aufgeklebt oder unter Zwischenfügung einer Rundschnurdichtung aufgeschraubt sein.

Die Abdichtung des Kraftübertragungselementes 15a,15b zwischen Kurbel 1 und Biegeelement 3 erfolgt durch einen Balg 19.

Auf die Außenseiten der rotierenden Teile, insbesondere auf dem Außendeckel 17 der Antriebsscheibe 2, sind Solarzellen zur Stromversorgung der auf den rotierenden Teilen vorgesehenen elektronischen Schaltungen aufgebracht.

Die Stromversorgung der rotierenden Teile kann durch induktiv übertragenen Strom erfolgen, wobei die signalübertragende Spule gleichzeitig auch die energieübertragende Spule sein kann.

Die bei der induktiven Signalübertragung von den rotierenden Tretlagerteilen auf die feststehenden Rahmenteile erforderlichen beiden Spulen sind koaxial angeordnet und stehen sich stirnseitig gegenüber, wobei die feststehende Spule in einer Lagerschale des Tretlagergehäuses und die rotierende Spule koaxial hierzu auf der dem Tretlagergehäuse zugewandten Seite der Antriebsscheibe angeordnet ist und die Tretlagerachse einen gemeinsamen Spulenkern bildet.

## Patentansprüche

1. Vorrichtung zur Messung der an einem Kurbelantrieb eines Fahrradtretlagers angreifenden Leistung, die folgende Merkmale aufweist:
a) ein Kurbelpaar (1) zur Übertragung des an der Kurbel (1) wirkenden Drehmoments auf eine mit einem oder mehreren Kettenblättern ausgestattete Antriebsscheibe (2);
b) ein Drehmoment-Meßwertaufnehmer, der das an der Kurbel (1) wirkende Drehmoment in ein entsprechendes elektrisches Signal umwandelt;
c) Mittel zur Umsetzung des an der Kurbel (1) wirkenden Drehmoments in Vorwärtsbewegung des Fahrrades.
dadurch gekennzeichnet, daß
d) der Drehmoment-Meßwertaufnehmer ein Biegeelement (3) ist, auf dem Dehnmeßstreifen (6) appliziert sind, und dieses Biegeelement (3) zwischen der Kurbel (1) und den Kettenblättern angeordnet ist und die an der Kurbel angreifende Kraft über das Biegeelement auf das Kettenblatt übertragen wird;
e) Mittel zur Bestimmung der Winkelgeschwindigkeit der Kurbel (1) vorgesehen sind, wobei diese Mittel ein entsprechendes elektrisches Signal liefern;
f) die an sich drehenden Teilen gemessenen elektrischen Signale, die dem Drehmoment und der Winkelgeschwindigkeit entsprechen, mittels induktiver Kopplung, Infrarot-Übertragung, Optoelektronik oder Ultraschall von dem sich drehenden Teil auf ein Auswertegerät am Fahrradrahmen übertragen werden;
g) wenigstens das Biegeelement (3) mit den darauf applizierten Dehnmeßstreifen (6) in einer abdichtenden Kapselung (14,22,23) eingeschlossen ist.

2. Vorrichtung nach Anspruch 1,
dadurch gekennzeichnet,
daß anstelle der Dehnmeßstreifen (6) zur Ermittlung des der Verformung des Biegeelementes (3) entsprechenden Signales induktive Wegaufnehmer oder Piezokristalle verwendet werden.

3. Vorrichtung nach Anspruch 1 oder 2,
dadurch gekennzeichnet,
daß das Mittel zur Bestimmung der Winkelgeschwindigkeit ein mittels Reedkontakt-Magnet, Lichtschranke, Induktionsschleife oder ein mechanisch arbeitender Drehzahlmesser ist.

4. Vorrichtung nach einem der vorhergehenden Ansprüche,
dadurch gekennzeichnet,
daß Teile der Antriebsscheibe (2) als Biegeelement (3) ausgebildet sind, zum Beispiel durch Ausnehmungen (13) in der Antriebsscheibe (2), wobei die stehenbleibenden Stege die Biegeelemente (3) darstellen, und daß die Dehnmeßstreifen (6) auf diesen Teilen appliziert sind.

5. Vorrichtung nach einem der vorhergehenden Ansprüche,
dadurch gekennzeichnet,
daß ein Bereich der Kurbel (1) selbst als Biegeelement (3) ausgebildet ist, auf dem die Dehnmeßstreifen (6) appliziert sind.

6. Vorrichtung nach einem der vorhergehenden Ansprüche,
dadurch gekennzeichnet,
daß die Verarbeitung der elektrischen Signale mittels eines am Fahrrad befestigten Mikroprozessors erfolgt, der sowohl die erbrachte Momentanleistung auf einem Display, zum Beispiel einem LCD-Element, direkt anzeigt als auch die Meßdaten für eine spätere Auswertung abspeichert.

7. Vorrichtung nach einem der vorhergehenden Ansprüche,
dadurch gekennzeichnet,
daß eine gleichzeitige telemetrische Übertragung der Meßwerte vom Fahrrad auf ein stationäres Rechnersystem beim Trainer oder Arzt erfolgt.

8. Vorrichtung nach einem der vorhergehenden Ansprüche,
dadurch gekennzeichnet,
daß auf die Außenseiten der rotierenden Teile, insbesondere auf dem Außendeckel (17) der Antriebsscheibe (2), Solarzellen zur Stromversorgung der auf den rotierenden Teilen vorgesehenen elektronischen Schaltung aufgebracht sind.

9. Vorrichtung nach einem der vorhergehenden Ansprüche,
dadurch gekennzeichnet,
daß die Stromversorgung der rotierenden Teile durch induktiv übertragenen Strom erfolgt, wobei die signalübertragende Spule gleichzeitig auch die energieübertragende Spule sein kann.

10. Vorrichtung nach einem der vorgehenden Ansprüche,
dadurch gekennzeichnet,
daß die bei der induktiven Signalübertragung von den rotierenden Tretlagerteilen auf die feststehenden Rahmenteile erforderlichen beiden Spulen koaxial angeordnet sind und sich stirnseitig gegenüberstehen, wobei die feststehende Spule in einer Lagerschale des Tretlagergehäuses und die rotierende Spule koaxial hierzu auf der dem Tretlagergehäuse zugewandten Seite der Antriebsscheibe angeordnet ist und die Tretlagerachse einen gemeinsamen Spulenkern bildet.

11. Verwendung einer Vorrichtung nach einem der vorhergehenden Ansprüche,
wobei die Daten der Momentangeschwindigkeit und/oder der zurückgelegten Strecke und/oder der Herzfrequenz und/oder der gemessenen Leistung und/oder der Tretfrequenz zeitsynchron in den Computer am Fahrrad eingelesen und abgespeichert werden.

## Claims

1. Device for measurement of the power acting upon a crank drive of a bicycle's bottom bracket set which shows the following features:
a) a pair of cranks (1) for the transmission of the torque acting upon the crank (1) to the drive wheel (2) which is equipped with one or several chainrings;
b) a torque-transducer which transforms the torque acting upon the crank (1) into an equivalent electrical signal;
c) means for transformation of the torque acting upon the crank (1) into forward movement of the bicycle,
characterized in that
d) the torque-transducer is a bending element (3) on which strain gauge strips (6) are applied, and this bending element (3) is placed between the chainrings and the crank(1) and the force acting on the crank is transmitted to the chainring via the bending element;
e) means for definition of the angular velocity of the crank (1) are provided, at which these means deliver an equivalent signal;
f) the electrical signals measured at the rotating parts which are equivalent to the torque and the angular velocity are transmitted, by means of inductive coupling, infrared transmission, optoelectronics or ultrasonics, from the rotating part to the computer at the bicycle frame;
g) at least the bending element (3) including the strain gauge strips applied on it is capsuled in a sealed metal protection (14,22,23).

2. Device according to claim 1,
characterized in
that in the place of the strain gauge strips (6) for the determination of the signal that is equivalent to the deformation of the bending element (3) inductive displacement transducers or piezoelectric crystals are used.

3. Device according to claim 1 or 2,
characterized in
that the means for definition of the angular velocity is a reed contact magnet, light barrier, induction loop or a mechanically working tachometer.

4. Device according to one of the preceding claims,
characterized in
that parts of the drive wheel (2) are designed as a bending element (3), for example by means of apertures (13) in the drive wheel (2) in the course of which the remaining frame constitutes the bending elements (3) and that the strain gauge strips (6) are applied on these parts.

5. Device according to one of the preceding claims,
characterized in
that a part of the crank (1) itself is designed as a bending element (3) on which the strain gauges (6) are applied.

6. Device according to one of the preceding claims,
characterized in
that the processing of the electrical signals ensues by means of a microprocessor fixed to the bicycle, which not only directly indicates the produced instantaneous power on a display, e.g. on a LCD-element, but also stores the measured values for subsequent evaluation.

7. Device according to one of the preceding claims,
characterized in
that a simultaneous telemetric transmission of the measured values ensues from the bicycle to a trainers or physician's stationary personal computer system.

8. Device according to one of the preceding claims,
characterized in
that solar cells are applied to the exterior sides of the rotating parts, especially onto the outer lid (17) of the drive wheel (2) for the current supply of the electronical circuits, which are meant to be applied to the rotating parts.

9. Device according to one of the preceding claims,
characterized in
that the current supply of the rotating parts ensues by inductively transmitted current, at which the signal transmitting coil may at the same time be the energy transmitting coil.

10. Device according to one of the preceding claims,
characterized in
that both the coils which are necessary for an inductive signal transmission from the rotating bottom bracket parts to the fixed frame parts, are arranged coaxially and lie on the face of each other, at which the fixed coil in a bearing shell of the bottom bracket housing and the rotating coil coaxial to this, on the side which is turned to the bottom bracket axle, build one common coil core.

11. Application of a device according to one of the preceding claims, in the course of which the data of the instantaneous speed and/or covered distance and/or heart rate and/or the measured power and/or the cadence are synchronously read-in and memorized in the computer on the handle bar of the bicycle.

## Revendications

1. Appareil de mesure de la puissance apparaissant au pédalier d'une bicyclette propulsée par manivelles ayant les caractéristiques suivantes.
a) Une paire de manivelles [1] pour la transmission du moment de rotation de la manivelle [1] sur une plaque de transmission équipée d'un ou plusieurs plateaux [2].
b) Un capteur de valeurs du moment de rotation exercé sur la manivelle [1], les transformant en signaux électriques correspondants.
c) Moyen de transmission du moment de rotation exercé sur la manivelle en mise en marche de la bicyclette ayant les caractéristiques suivantes:
d) Le capteur de valeurs du moment de rotation est un élément ployable [3] sur lequel sont appliquées des gauges [6]. Cet élément ployable est placé entre la manivelle [1] et le ou les plateaux. La force exercée sur la manivelle est transmise sur le plateau par cet élément ployable
e) Moyen déstiné au mesurage de la vitesse angulaire de la manivelle [1], la transformant en signaux électriques correspondants.
f) Les signaux électriques mesurés aux parties rotatives et correspondant au moment de rotation et à la vitesse angulaire sont transmis de la pièce rotative au cadre de la bicyclette soit par couplage inductif, soit par transmission infrarouge, soit par électronique optique ou par ultrason.
g) Au moins l'élément ployable [3] avec les gauges appliquées [6] est incorporé dans un boîter entièrement étanche [14,22,23].

2. Appareil selon la spécification *1)* ayant les caractéristiques suivantes:
Utilisation de cristaux piézo-électriques ou de capteurs de déformation inductifs au lieu des gauges [6] pour le mesurage d'un signal correspondant à la déformation de l'élément ployable.

3. Appareil selon les spécifications *1)* ou *2)* ayant les caractéristiques suivantes:
Le moyen déterminant la vitesse angulaire est un compteur de tours muni soit d'un amant Reedcontact, soit d'une cellule photo-électrique, soit d'une bobine inductive ou d'un système mécanique.

4. Appareil selon une des spécifications précédentes ayant la caractéristique suivante:
Des parties de la plaque de transmission [2] sont utilisées comme éléments ployables [3], par exemple après modifications par alésage [13] de la plaque de transmission [2], à l'occasion de quoi les nervures restantes représentent les éléments ployables sur lesquels sont appliquées les gauges [6].

5. Appareil selon une des spécifications précédentes ayant la caractéristique suivante:
Une partie de la manivelle [1] même sert d'élément ployable [3] sur lequel sont appliquées les gauges [6].

6. Appareil selon une des spécifications précédentes ayant la caractéristique suivante:
La transformation des signaux électriques s'effectue grâce à un micro-processeur fixé au cadre de la bicyclette, lequel non seulement affiche la valeur instantanée de la puissance sur un écran, par exemple un écran LCD, mais aussi mémorise les données pour une interprétation ultérieure.

7. Appareil selon une des spécifications précédentes ayant la caractéristique suivante:
Une transmission instantanée des données par télémétrie est effectuée de la bicyclette à un système informatique stationnaire installé près de l'entraineur ou du médecin.

8. Appareil selon une des spécifications précédentes ayant la caractéristique suivante:
Sur les surfaces extérieures des parties rotatives, en particulier sur le couvercle [17] de la plaque de transmission [2], se trouvent des cellules photovoltaïques pour l'approvisionnement en énergie du couplage électronique des parties rotatives.

9. Appareil selon une des spécifications précédentes ayant la caractéristique suivante:
L'approvisionnement en énergie des parties rotatives s'effectue par un courant transmis par induction, à l'occasion de quoi la bobine de transmission des signaux peut également servire à la transmission d'énergie.

10. Appareil selon une des spécifications précédentes ayant la caractéristique suivante:
Les deux bobines servant à la transmission des signaux par induction des parties rotatives du pédalier aux parties fixes du cadre sont placées coaxialement et se trouvent face à face. La bobine fixe se trouve dans la cuvette à billes du mouvement de pédalier tandis que la bobine rotative se trouve coaxialement placée dans la plaque de transmission [2] du côté intérieur face au mouvement de pédalier. L'axe du pédalier forme un noyau comun.

11. Utilisation d'un appareil selon une des spécifications précédentes ayant la caractéristique suivante:
Les données de la vitesse instantanée, la distance parcourue, la pulsation, la puissance ainsi que la cadence du pédalier sont affichées instantanément sur l'écran de l'ordinateur fixé à la bicylette ainsi que mémorisés.
